# EUROPEAN PATENT APPLICATION

(11) **EP 4 844 038 A1**
(43) Date of publication of application: **25.11.2026**
(21) Application number: 25177593.8
(22) Date of filing: 20.05.2025
(51) Int. Cl.: C09J 7/10, C09J 133/06, C09J 153/00

(54) **DEBONDABLE OCA FOR HOLOGRAM REPLICATION PROCESSES**

(71) Applicant: TESA SE, 22848 Norderstedt (DE)
(72) Inventor: HANISCH, Mathias, 22848 Norderstedt (DE); WEDEL, Bastian, 22848 Norderstedt (DE); KRÖGER, Nils Hendrik, 22848 Norderstedt (DE); KERSTING, Johannes Andreas, 22848 Norderstedt (DE); LÜHMANN, Bernd, 22844 Norderstedt (DE); SONG, Liping, Suzhou (CN)
(74) Representative: tesa SE

(57) **Abstract**

The present invention relates to a debondable optically clear adhesive compound, an optical adhesive tape comprising the optically clear adhesive compound, and their use in a semi-continuous or continuous process.

## Description

### Technical field

The present invention relates to a debondable optically clear adhesive compound, an optical adhesive tape comprising the optically clear adhesive compound, and their use in a semi-continuous or continuous process.

### Background

Holographic Optical Elements (HOEs) typically refer to optical components in which holographic properties are used to change a certain beam path of light, such as transmission, reflection, diffraction, scattering and/or deflection. This means that the desired optical functionalities can be implemented in a compact manner. The holographic properties preferably utilize the wave character of light, in particular coherence and interference effects considering both the intensity as well as the phase of the light.

Holographic Optical Elements are used in many areas, such as transparent displays (e.g., in shop windows, refrigerators, vehicle windows), for lighting applications, such as warning or signal signs in glass surfaces, and light-sensitive detection systems, for example, for interior monitoring, eye-tracking in vehicles or tracking the presence of people in interior spaces.

Holograms are formed by the interference of a reference beam with light that is either reflected or diffracted from an object (object beams). Traditionally, three-dimensional objects were utilized to create unique, custom holograms. However, commercially available HOEs are often produced in large quantities using duplication methods. These methods typically involve a master hologram containing the image to be replicated. Such master holograms are usually stored in a substrate material, which is often transparent and can take various shapes like a cuboid, plate, or roller. The combination of the master hologram with the substrate body creates a master element.

The master element is exposed to a coherent light source to replicate the image from the master hologram into a photosensitive composite. For mass production, the photosensitive composite can be provided in the form of a continuous web, which includes photosensitive material and one or more carriers or protective layers. During exposure, the composite web is placed on the surface of the master element. To create a reflection hologram, the coherent light can pass through the composite web before reaching the master hologram and reflecting back into the composite web. Alternatively, to create a transmission hologram, the coherent light can be firstly directed at the master hologram, whereby being diffracted before reaching the composite web. In both cases, object and reference beams interfere with each other in the photosensitive material, forming the replicated hologram. The replication process is sensitive to unwanted additional light, which can also interfere with the object and/or reference beams. If irregularities or gaps arise at the interface between the composite web and the surface of the master element, the reference and/or object beams may be internally reflected. This can lead to light losses or unwanted interferences, affecting the quality of the replicated hologram. Therefore, providing adequate optical contact between the master element and the composite web is crucial for the quality of the replicated hologram. This can be achieved by index matching liquids, optical clear films or optical clear adhesives (OCA).

WO 2017/108704 A1 discloses a device for producing volume reflection holograms, with substrate-guided reconstruction beams.

WO 2023/247702 A1 discloses a method for replicating holograms into light-sensitive composite webs using an optical adhesive film.

Optically Clear Adhesives (OCA) offer several advantages over index match liquids. Firstly, OCA materials are not liquid, volatile, or toxic, making them safer and more environmentally friendly. Additionally, they do not leave any residues, ensuring clean application. OCAs maintain stable dimensions, thickness, and width, which contributes to consistent performance. Another significant benefit is the possibility of reuse, which enhances their cost-effectiveness. Unlike index match liquids, OCAs prevent lateral movement of the master and holographic film, enabling mechanical coupling of the two layers. Furthermore, the lamination and delamination of the photopolymer film stack using OCAs can be done offline, whereas liquids must be added and removed within the copy process setup. This offline capability simplifies the manufacturing process and improves efficiency.

For the application of Optically Clear Adhesives (OCA) in the reproduction of holograms, certain prerequisites must be met. These include exceptional optical transparency with transmission rates exceeding 99%, and no color distortion, maintaining a b-value of less than 1. Additionally, OCAs must produce no haze, keeping it below 1, and have refractive indices (Rls) very similar to those of common substrates like triacetate cellulose (TAC), polycarbonate (PC), and polyethylene terephthalate (PET), with a difference of the refractive indices (ΔRI) of less than 0.1. They must be free from defects or particles down to a size of 25 µm, ensuring a pristine application. OCAs should provide immediate optical contact to both plastic and glass surfaces, feature low adhesion for easy removal without breakage after copying, and exhibit no birefringence, maintaining the integrity of the optical properties.

Application examples for OCA in holographic replication include for example the replication process for edge-lit holograms, wherein a light coupling element is required to guide the light to the stack of the master element and photopolymer film. This light coupling agent preferably has the form of a glass roller to enable a roll-to-roll process. In this setup, the OCA serves as an optical bonding material to avoid total reflection. The adhesive must be soft enough to guarantee a good contact line between the glass roller and the master element, yet elastic enough to be detached without high peel force and leaving no residues.

A further example is the replication process for free-beam holograms, wherein optical contacting between the master hologram and the copying material facilitates the creation of a seamless interface between the hologram master and the photopolymer layer. This ensures high-fidelity replication by maintaining the integrity of the holographic image.

Additionally, OCAs can be used to cancel out undesired interferences originating from interfaces due to vibrations. By eliminating reflexes, the adhesive prevents disturbing interference patterns in the photosensitive material, thereby enhancing the quality of the holographic replication.

The need for optically clear adhesives (OCA) that are suitable for the production of replicas of holograms remains a significant technical problem. These adhesives must fulfill stringent requirements to ensure high-quality holographic reproduction. Specifically, OCAs must exhibit exceptional optical transparency, maintain stable dimensions, and provide immediate optical contact to both plastic and glass surfaces. Additionally, they should have similar refractive indices to common substrates, be free from defects or particles, and produce no haze or color distortion. The adhesives must also facilitate efficient coupling and decoupling processes, allowing for easy removal without breakage after copying. Addressing these prerequisites is crucial for advancing the industrial-scale production of holograms and ensuring the scalability and quality of the resulting replicas.

There is a need for optically clear adhesives exhibiting cohesive and adhesive properties to fulfill the requirements for replication of holograms, namely being optically clear adhesives and being capable of bonding and debonding during (semi-)continuous replication process, especially during a roll-to-roll process.

Especially there is a need for optically clear adhesives to create an optical contact between the master element and the photosensitive composite, wherein the optical contact remains stable during the replication process and does not harm the light-sensitive composite.

The objective of the invention is to provide an optically clear adhesive and an optically clear adhesive tape that meets the requirements for the application of hologram replication and is preferably suitable for the application in semi-continuous and/or continuous replication of holograms.

Another objective of the invention is to provide an optically clear adhesive, which improves the performance and quality during the replication process by allowing the formation of a contact area with sufficient width and sufficient penetration depth of the master element or glass roller element (light coupling element) in the adhesive tape, while improving the stability of the contact area during replication, wherein the light-sensitive composite is not harmed.

Another objective of the invention is that the optically clear adhesive and the optically clear adhesive tape are bondable and debondable in the process of hologram replication, which is preferably a semi-continuous or continuous process.

Another objective of the invention is that the adhesive compound and the adhesive tape should also be easy to produce and to process.

### Brief summary

A first and general aspect that solves these objectives is an optically clear adhesive compound, which is suitable for the application in the replication process of holograms, and has a complex modulus measured at a frequency of 10 Hz and a temperature of 25 °C, G*(10 Hz, 25 °C), of equal or smaller than (≤) 5 MPa (five megapascals).

The inventive compound enables its application in holographic replication by possessing novel material properties. These novel properties allow and improve the use of the material for continuous connection between the holographic master element and the light-sensitive composite, which is crucial for defect-free continuous replication. The compound's complex modulus, haze value, and transmission rates ensure that it maintains a stable assembly while forming an optically clear contact, thereby preventing any damage to the light-sensitive composite during the replication process.

If not explicitly stated otherwise the complex modulus G* is calculated by the formula: G* = (G'² + G"²)^{0.5}, wherein G' is the storage modulus and G" the loss modulus, which are both determined by dynamic-mechanical analysis as described in the experimental section.

Embodiments referred to below as preferred are combined, in particularly preferred embodiments, with features of other embodiments referred to as preferred. Especially preferred, therefore, are combinations of two or more of the embodiments referred to below as particularly preferred. Likewise preferred are embodiments in which a feature of one embodiment that is referred to any extent as being preferred is combined with one or more further features of other embodiments which are referred to any extent as being preferred.

Where, below, both specific amounts or fractions of an element and preferred configurations of the element are disclosed, the specific amounts or fractions of the elements with preferred configuration are also disclosed. Moreover, in the case of the corresponding specific total amounts or total fractions of the elements, it is disclosed that at least some of the elements may have preferred configuration and also, in particular, that elements of preferred configuration may be present again in the specific amounts or fractions within the specific total amounts or total fractions.

### Detailed description

According to a first aspect of the invention, the present invention relates to an optically clear adhesive compound, for use as optical adhesive tape in the replication process of holograms, wherein the optically clear adhesive compound has a G* ≤ 5 MPa, wherein G* is calculated by the formula: G* = (G'² + G"²)^{0.5}, wherein G' and G" are determined by dynamic-mechanical analysis as described in the experimental section.

In a preferred embodiment, the optically clear adhesive compound has a complex modulus G*(10 Hz, 25°C) ≤ 2MPa, or even more preferably a G*(10 Hz, 25°C) ≤ 1MPa.

The parameters storage modulus (G') and loss modulus (G"), are parameters for the more precise description and quantification of the measure of elastic and viscous component and of the ratio of the components to each other, which can be determined by means of dynamic mechanical analysis (DMA), are used. G' is a measure of the elastic component, G" a measure of the viscous component of a substance. Both parameters are dependent on deformation frequency and temperature.

The parameters can be ascertained with the aid of a rheometer. The material to be examined is subjected here to a sinusoidally oscillating shear stress, for example in a plate-plate arrangement. In the case of shear stress-controlled devices, deformation as a function of time and the time delay of this deformation are measured with respect to the onset of shear stress. This time delay is referred to as the phase angle δ.

The storage modulus G' is defined as follows: G' = (τ/γ) • cos(δ) (τ = shear stress, γ = deformation, δ = phase angle = phase shift between shear stress vector and deformation vector).

The definition of the loss modulus G" is: G" = (τ/γ) • sin(δ) (τ = shear stress, γ = deformation, δ = phase angle = phase shift between shear stress vector and deformation vector).

The complex modulus G*, a measure combining both the storage modulus G' and the loss modulus G", is calculated using the formula: G* = (G'² + G"²)^{0.5}.

The adhesive compound of the invention is characterized as optically clear by the specifying of the haze value of less than 5%, preferably 0% to less than 1%, and the transmission at 400 nm to 800 nm of more than 90%, preferably more than 95%, more preferably 98 to 100%, very preferably more than 99 to 100%, each measured according to ASTM D1003-13. The detailed description of the measurement of the transmission and the haze value according to ASTM D1003-13 is given in the Test Methods section.

With the preferred and more preferred values for the haze and the transmission, particularly advantageous optical properties are achieved, in particular for the use in for bonding and debonding articles or components in electronic devices and/or in motor vehicles, such as more particularly displays, holographic optical elements, lenses and glasses, wherein the adhesive compound at the same time has low adhesion.

### Replication process of holograms

The optically clear adhesive compound of the invention is suitable for the replication of holograms. The replication of holograms involves transferring holographic images from a master element to a light-sensitive composite web. The process includes providing a master element with a substrate body and master hologram, applying the composite web to the master element's surface, exposing it to replicate the hologram, and detaching the web. An optical adhesive film is temporarily applied between the composite web and master element to ensure optical contact during exposure.

Optically clear adhesives (OCAs) have specific properties to be suitable for replication processes. These properties include high transparency and minimal haze, suitable refractive index matching, adequate adhesion, elasticity, transmission, and compatibility with materials like PC, PET, TAC, PMMA.

Different replication processes using OCAs include non-continuous replication, semi-continuous replication, and continuous replication. Non-continuous replication involves stationary master elements and manual or semi-automated application of adhesive and composite web. Semi-continuous replication combines stationery and moving components with partial automation. Continuous replication is a fully automated, roll-to-roll process that involves synchronized movement of master elements, composite web, and adhesive film, making it suitable for mass production. These processes can create both reflection and transmission holograms, with the light source arranged to achieve the desired angle and direction for hologram replication.

For the application of Optically Clear Adhesives (OCA) in the reproduction of holograms, certain prerequisites must be met. These prerequisites include exceptional optical transparency with transmission rates exceeding 99%, and no color distortion, maintaining a b value of less than 1. Additionally, OCAs must produce no haze, keeping it below 1, and have refractive indices very similar to those of common substrates like TAC, PC, and PET, with a ΔRI of less than 0.1. They must be free from defects or particles down to a size of 25 µm, ensuring a pristine application. OCAs should provide immediate optical contact to both plastic and glass surfaces, feature low adhesion for easy removal without breakage after copying, and exhibit no birefringence, maintaining the integrity of the optical properties.

According to one embodiment, the optically clear compound has
- a tan delta (1 Hz) ≤ 0.12, preferably ≤ 0.10, in the frequency range from 10⁻² to 10⁻³ Hertz, determined by dynamic-mechanical analysis as described in the experimental section; and
- a dynamic glass transition temperature T_{g,dyn} (1 Hz) of ≤ 20°C determined by dynamic-mechanical analysis as described in the experimental section.

As used herein, the term "tan delta" also referred to as damping factor, dissipation factor or loss factor is defined as the ratio between the loss modulus (G") and the elastic modulus (G'). According to the present invention, the tan delta value measured at 25°C and in the frequency range from 10⁻² to 10⁻³ Hertz may be below 0.12, preferably below 0.1.

The dynamic glass transition temperature T_{g,dyn} is defined as the temperature at which tan delta curve exhibits a maximum. It depends on the frequency of the applied sinusoidal oscillating stress acting on the sample. Herein, the T_{g,dyn} was determined using 1 Hz frequency.

According to one embodiment, the optically clear compound fulfills the following criteria:
- a peel adhesion on polycarbonate (PC) of ≤ 50 cN/cm, which is measured as described in the experimental section;
- a peel adhesion on glass of ≤ 20 cN/cm, which is measured as described in the experimental section;
- a tensile strength of ≥ 1.2 MPa, which is measured as described in the experimental section.

Optically clear adhesive compounds having a peel adhesion of 0.5 N/cm or less (≤ 50 cN/cm) on PC, preferably 0.2 N/cm or less (≤ 20 cN/cm); a peel adhesion 0.2 N/cm or less on glass (≤ 20 cN/cm), preferably 0.1 N/cm or less (≤ 10 cN/cm); and a tensile strength of at least 1.2 MPa (≥ 1.2 MPa), preferably at least 5.0 MPa (≥ 5.0 MPa), or more preferably at least 10.0 MPa (≥ 10.0 MPa), allow the avoidance of breaking of the web in case the optically clear adhesive compound is applied in a web-based process.

According to one embodiment, the optically clear adhesive compound is based on a material selected from Polyurethan (PU), silicone (Si), polyvinyl chloride (PVC), styrene-ethylene-butylene-styrene (SEBS), (meth)acrylates, or mixtures thereof. "Based on" or "on the basis of" means in this context that the properties of the optically clear adhesive compound are at least strongly determined by the fundamental properties of the material. It is, of course, not excluded that these properties can also be additionally influenced by the use of modifying auxiliary or additive substances in a composition.

In particular, this can mean that the proportion of a material selected from Polyurethan (PU), silicone (Si), polyvinyl chloride (PVC), styrene-ethylene-butylene-styrene (SEBS), (meth)acrylates, or mixtures thereof in the total mass of the optically clear adhesive compound is more than 50% by weight.

In one embodiment, the proportion of a material selected from Polyurethan (PU), silicone (Si), polyvinyl chloride (PVC), styrene-ethylene-butylene-styrene (SEBS), (meth)acrylates, or mixtures thereof in the total mass of the optically clear adhesive compound is at least 50% by weight, preferably at least 60% by weight, and particularly preferably 70% by weight.

Polyurethanes provide excellent clarity in combination with the flexibility needed to serve holographic replication applications. Moreover, the tensile strength of PUs makes them suitable for roll-to-roll processes

Silicones (Si) offer superior mechanical properties and low surface tension, which enhances their ability to wet polar substrates and enable good optical bonding results. The low level of adhesion in combination with the ability to create highly elastic films make them ideal candidates for debonding processes in continuous roll-to-roll processes.

Furthermore, PVC, SEBS or other rubber-based materials can offer optical clarity in combination with the suited mechanical properties (e.g. tensile strength) to be valuable options for process aids in roll-to-roll holographic replications processes.

(Meth)acrylates, including poly(meth)acrylates, are preferred for their superior clarity and ease of processing. Their excellent optical properties ensure that holographic images are bright and clear, while their chemical stability maintains image fidelity over time. The combination of (meth)acrylates with polyurethanes enhances these advantages, providing a balance of flexibility and durability that is particularly favorable for replicating high-quality holographs.

In a preferred embodiment, the optically clear adhesive compound is based on a material selected from Polyurethan (PU), silicone (Si), (meth)acrylates, or a mixture of PU and (meth)acrylates. Those materials provide superior performance as optically clear adhesives in roll-to-roll processes for holographic replication.

According to one embodiment, the optically clear adhesive compound comprises or consists of
a) 35 - 80 % by weight, optionally 50 - 75 % by weight, or optionally 60 - 70 % by weight, of one or more poly(meth)acrylates P; and
b) 20 - 65 % by weight, optionally 25 - 50 % by weight, or optionally 30 - 40 % by weight, selected from the group of
   b1) one or more plasticizing agents; and
   b2) one or more cohesion-increasing components.

The optically clear compound comprises or consists of one or more (co)polymers P and additionally one or more plasticizing agent and/or one or more cohesion-increasing components.

According to the general understanding of polymer chemistry, the optically clear compound is a multi-component system, which comprises additional components next to the (co)polymers P, such as plasticizing agent and/or cohesion-increasing components. These additional components may be copolymerized within the copolymers or may be dissolved in the polymer composition. The inclusion of oligomers and monomers can modify the viscosity and curing behavior, while additives such as plasticizers or cohesion-increasing agents can further refine the mechanical and optical characteristics of the adhesive, enhancing its adhesion, elasticity, and overall performance in various applications.

The term "one or more" refers in a professional manner to the chemical nature of the corresponding compounds and not to their quantity. In this sense, the optically clear adhesive compound may contain one (single) poly(meth)acrylate or multiple poly(meth)acrylates. Therefore, the optically clear adhesive compound is specifically based on poly(meth)acrylate. If the singular form "poly(meth)acrylate" is used below, it also includes the case where the optically adhesive compound or another described compound or layer of the adhesive tape contains two or more poly(meth)acrylates; the features disclosed for the singular form apply correspondingly to a plurality of poly(meth)acrylates. Likewise, if the plural form "poly(meth)acrylates" is used below, it also includes the case where the optically clear adhesive compound or another described compound or layer of the adhesive tape contains only a single poly(meth)acrylate; the features disclosed for the plural form apply correspondingly to the only one poly(meth)acrylate.

The optically clear compound comprises 30 - 80 % by weight, optionally 50 - 75 % by weight, or optionally 60 - 70 % by weight, of one or more poly(meth)acrylates P.

A "poly(meth)acrylate" is understood to be a polymer obtained by conventional radical, controlled radical or anionic polymerization of acrylic and/or methacrylic monomers and, if necessary, other copolymerizable vinyl group containing monomers. Specifically, a "poly(meth)acrylate" is understood to be a polymer whose monomer base consists of at least 50% by weight of acrylic acid, methacrylic acid, acrylic acid esters, and/or methacrylic acid esters, with acrylic acid esters and/or methacrylic acid esters being included at least partially, preferably at least 30% by weight, based on the total monomer base of the polymer in question.

In one embodiment, the monomer base of the one or more poly(meth)acrylates P comprises or consists of at least 80% by weight, at least 85% by weight, at least 90% by weight, at least 95% by weight, at least 98% by weight, or 100% by weight of (meth)acrylic esters.

In a preferred embodiment, the monomer base of the one or more poly(meth)acrylates P comprises or consists of at least 50% by weight, at least 60% by weight, or at least 70% by weight of acrylic esters.

In a preferred embodiment, the optically clear adhesive compound comprises or consists of ≥ 50% by weight, optionally ≥ 60% by weight, of (meth)acrylic esters.

In one embodiment, the optically clear adhesive compound comprises or consists of
a) 35 - 80 % by weight, optionally 50 - 75 % by weight, or optionally 60 - 70 % by weight, of (co)polymers P; and
b) 20 - 65 % by weight, optionally 25 - 50 % by weight, or optionally 30 - 40 % by weight, of b1) plasticizing agent.

In another preferred embodiment, the optically clear adhesive compound comprises or consists of
a) 35 - 80 % by weight, optionally 50 - 75 % by weight, or optionally 60 - 70 % by weight, of (co)polymers P; and
b) 20 - 65 % by weight, optionally 25 - 50 % by weight, or optionally 30 - 40 % by weight, of b2) cohesion-increasing component.

### (Meth)Acrylics

According to one embodiment, the monomer base of the one or more poly(meth)acylates P of the optically clear compound comprises or consists of
I. 60 - 92 % by weight, optionally 70 - 90 % by weight, or optionally 75 - 80 % by weight, of (meth)acrylic monomers having a homopolymer glass transition temperature Tg determined via DSC, which is lower or equal than 0 °C, optionally lower or equal than -10 °C, or optionally lower or equal than -20 °C, wherein the % by weight refer to 100% by weight of the monomer base;
II. 8 - 40 % by weight, optionally 10 - 30 % by weight, or optionally 20 - 25 % by weight, of monomers selected from the group consisting of
   a. (meth)acrylic esters;
   b. (meth)acrylic amides;
   c. monomers comprising at least one polymerizable vinyl group;
   having a homopolymer glass transition temperature Tg determined via DSC, which is higher than 0 °C, optionally higher or equal than 10 °C, or optionally higher or equal than 20 °C, wherein the % by weight refer to 100% by weight of the monomer base.

In one embodiment, the monomer base of the one or more poly(meth)acylates P of the optically clear compound comprises or consists of
I. 60 - 92 % by weight, optionally 70 - 90 % by weight, or optionally 75 - 80 % by weight, of (meth)acrylic monomers having a homopolymer glass transition temperature Tg determined via DSC, which is ≤ 0 °C, optionally ≤ -10 °C, or optionally ≤ -20 °C, wherein the % by weight refer to 100% by weight of the monomer base;
II. 8 - 40 % by weight, optionally 10 - 30 % by weight, or optionally 20 - 25 % by weight, of monomers selected from the group consisting of
   a. (meth)acrylic esters;
   b. (meth)acrylic amides;
   c. monomers comprising at least one polymerizable vinyl group;
   having a homopolymer glass transition temperature Tg determined via DSC, which is ≥ 50 °C, optionally ≥ 70 °C, or optionally ≥ 90 °C, wherein the % by weight refer to 100% by weight of the monomer base.

In a preferred embodiment, the monomer base of the one or more poly(meth)acylates P of the optically clear compound comprises or consists of
I. 60 - 92 % by weight, optionally 70 - 90 % by weight, or optionally 75 - 80 % by weight, of (meth)acrylic monomers having a homopolymer glass transition temperature Tg determined via DSC, which is ≤ 0 °C, optionally ≤ -10 °C, or optionally ≤ -20 °C, wherein the % by weight refer to 100% by weight of the monomer base;
II. 8 - 40 % by weight, optionally 10 - 30 % by weight, or optionally 20 - 25 % by weight, of (meth)acrylic monomers having a homopolymer glass transition temperature Tg determined via DSC, which is ≥ 50 °C, optionally ≥ 70 °C, or optionally ≥ 90 °C, wherein the % by weight refer to 100% by weight of the monomer base.

In another embodiment, the monomer base of the one or more poly(meth)acylates P of the optically clear compound comprises or consists of
I. 60 - 92 % by weight, optionally 70 - 90 % by weight, or optionally 75 - 80 % by weight, of (meth)acrylic monomers having a homopolymer glass transition temperature Tg determined via DSC, which is ≤ 0 °C, optionally ≤ -20 °C, or optionally ≤ -40 °C, wherein the % by weight refer to 100% by weight of the monomer base;
III. 8 - 40 % by weight, optionally 10 - 30 % by weight, or optionally 20 - 25 % by weight, of monomers selected from the group consisting of
   a. (meth)acrylic esters;
   b. (meth)acrylic amides;
   c. monomers comprising at least one polymerizable vinyl group;
   having a homopolymer glass transition temperature Tg determined via DSC, which is ≥ 50 °C, optionally ≥ 70 °C, or optionally ≥ 90 °C, wherein the % by weight refer to 100% by weight of the monomer base.

In another preferred embodiment, the monomer base of the one or more poly(meth)acylates P of the optically clear compound comprises or consists of
I. 60 - 92 % by weight, optionally 70 - 90 % by weight, or optionally 75 - 80 % by weight, of (meth)acrylic monomers having a homopolymer glass transition temperature Tg determined via DSC, which is ≤ 0 °C, optionally ≤ -20 °C, or optionally ≤ -40 °C, wherein the % by weight refer to 100% by weight of the monomer base;
II. 8 - 40 % by weight, optionally 10 - 30 % by weight, or optionally 20 - 25 % by weight, of (meth)acrylic monomers having a homopolymer glass transition temperature Tg determined via DSC, which is ≥ 50 °C, optionally ≥ 70 °C, or optionally ≥ 90 °C, wherein the % by weight refer to 100% by weight of the monomer base.

The pressure-sensitive adhesive used in the OCA material of the invention may be selected and adapted according to desired application. Accordingly, especially preferred monomers whose homopolymers, as a basis of the pressure-sensitive adhesive, are those having a glass transition temperature below 0°C, whereas for other applications monomers having a glass transition temperature of above 0°C are preferred. Furthermore, mixtures of these monomers may be used for obtaining the pressure-sensitive adhesive.

For soft materials, which show good wetting properties and have a low G* level as well as a low peel adhesion, the pressure-sensitive adhesive is preferably obtained from monomers whose homopolymers have a glass transition temperature of not more than 0°C; the glass transition temperature determined via dynamic-mechanical analysis (DSC) as described in the experimental section. The lower this specific glass transition temperature, the greater the positive effect on the plastification of the material. From the group of the monomers having a glass transition temperature of not more than 0°C, particular preference is given to 2-ethylhexyl acrylate, n-butyl acrylate, propylheptyl acrylate, lauryl acrylate, isooctyl acrylate, n-octyl acrylate, iso-C17 acrylate, isodecylacrylate, ethylene diglycol acrylate, 2-ethylhexyl diglycol acrylate, 2-(2-ethoxyethoxy)ethyl acrylate and also mixtures.

Moreover, for particularly advantageous tensile strength and cohesion, it is advantageous to use monomers whose homopolymers have a glass transition temperature of at least 0°C. The higher this specific glass transition temperature, the greater the positive effect on the tensile strength. From this group of monomers, particular preference is given to dihydrodicyclopentadienyl acrylates, isobornyl (meth)acrylate, methyl (meth)acrylate, 2-phenoxyethyl (meth)acrylate, benzyl (meth)acrylate, stearyl (meth)acrylate, tert-butyl (meth)acrylate, cyclohexyl methacrylate, 4-tert-butylcyclohexyl (meth)acrylate, ethyl methacrylate, N-vinylpyrrolidone, N-vinylcaprolactam, dimethylacrylamide, diethylacrylamide, 4-acryloylmorpholine, phenoxybenzyl (meth)acrylate and also mixtures.

To further adjust the intermolecular interactions and thus the cohesion of the resulting mixture, it may be advantageous to use hydroxy- or amide-containing monomers. However, this increases the adhesion to the usually polar substrates, such as glass, polycarbonate (PC), tricellulose acetate (TAC) or polyethylene terephthalate (PET). Preferred monomers include 2-hydroxyethyl (meth)acrylates, 2-hydroxypropyl (meth)acrylates, 3-hydroxypropyl (meth)acrylates, 2-hydroxybutyl (meth)acrylates, 4-hydroxybutyl (meth)acrylates, 6-hydroxyhexyl (meth)acrylates, 1,4-cyclohexanedimethanol mono(meth)acrylates, 1-glycerol (meth)acrylates, 2-hydroxyethyl(meth)acrylamides, N-hydroxypropyl(meth)acrylamides, vinyl alcohol and allyl alcohol and also mixtures thereof.

In a preferred embodiment, the optically clear compound comprises isostearyl acrylate. For balancing the opposite effects of low adhesion and high tensile strength, the use of isostearyl acrylate is advantageous specifically in a range of 10 - 35%.

### Plasticizing Agent

As plasticizing agent, it is possible to use all of the plasticizing substances known from adhesive tape technology. These include, among others, the paraffinic and naphthenic oils, (functionalized) oligomers such as oligobutadienes, oligoisoprenes, liquid nitrile rubbers, liquid terpene resins, vegetable and animal oils and fats, phthalates, functionalized acrylates, low molecular mass polyacrylates, water-soluble plasticizers, plasticizing resins, phosphates, polyphosphates, and citrates.

Plasticizers are essential components in the formulation of pressure-sensitive adhesives (PSAs), as they significantly influence the physical properties and performance of the adhesive. These substances are added to increase the flexibility, workability, and plasticity of the adhesive formulation. Various types of plasticizers can be utilized in PSAs, each imparting distinct characteristics to the adhesive.

Common plasticizers include paraffinic and naphthenic oils, which are widely used due to their compatibility with many polymer systems. Functionalized oligomers such as oligobutadienes and oligoisoprenes, as well as liquid nitrile rubbers and liquid terpene resins, are also employed to enhance the adhesive's properties. Additionally, natural vegetable and animal oils and fats, phthalates, functionalized acrylates, low molecular mass polyacrylates, water-soluble plasticizers, plasticizing resins, phosphates, polyphosphates, and citrates are among the other plasticizers that can be used.

One critical aspect of plasticizers in PSAs is their impact on the glass transition temperature (Tg) of the adhesive. By incorporating plasticizers, the Tg of the adhesive can be lowered, resulting in better wetting as well as lower adhesion. In contrast, the tensile strength which is needed to allow for the use of the film in a roll-to-roll process is compromised by addition of plasticizer.

In the present application, DINCH (diisononyl cyclohexane-1,2-dicarboxylate) is preferred as a plasticizer. DINCH is a highly effective plasticizer known for its low volatility, excellent compatibility with various polymer systems, and favorable environmental profile. The inclusion of DINCH in the adhesive formulation ensures that the adhesive maintains its desired properties while adhering to safety and environmental standards.

According to one embodiment, the plasticizing agent of the optically clear compound is an aliphatic ester, preferably a 1,2-cyclohexane dicarboxylic acid diisononyl ester.

An aliphatic ester is a type of ester derived from aliphatic carboxylic acids and alcohols, characterized by the presence of a carbon chain that is non-aromatic in nature. These esters can be used as plasticizers due to their ability to impart flexibility and compatibility with various materials.

### Cohesion-increasing component;

In one embodiment, the optically clear adhesive compound comprises a cohesion-increasing component. Thus, in this approach, the elastic component has to be added to the formulation mixture. This can be achieved using polyurethane diacrylate oligomers, such as commercially available polyurethane diacrylate oligomers from *Sartomer*, *Miwon*, *or others*, in relatively large quantities such as 30 - 65 % by weight of the optically clear adhesive compound. On the one hand, this densifies the polymer network by a large amount of crosslinking and, even more important, the urethane groups add the hydrogen bonding to the system that provides the interactions needed to achieve the required tensile strength which is needed to make the film suitable for roll-to-roll processes. If added too much, the viscosity of the (meth)acrylate monomer mixture becomes too large to still be coated accurately. In general, if the interactions are too dominant, the G* level of the resulting film becomes too high resulting in an inefficient wetting of the substrates. Consequently, the contact line in the edge-lit replication process is not homogeneous and continuous anymore.

Cohesion-increasing components are substances or monomer groups that enhance the internal strength polymer materials by promoting specific intermolecular interactions, like aromatic, polar, hydrogen or van-der-Waals bonding interactions. Typical examples of cohesion-increasing components include polyurethane oligomers difunctionalized with (meth)acrylic groups, such as Sartomer's CN8893NS and CN9021, and Bomar Chemicals' BR5541M and BR-3747AE. These materials are specifically designed to provide high transparency, strong bonding based on hydrogen interactions, and resistance to environmental factors, making them ideal for OCA applications.

According to one embodiment, the optically clear adhesive compound comprises a cohesion-increasing component, which is a difunctional oligomers, preferably selected from the group of a divalent urethane acrylate oligomers (for example CN8893NS, CN9021 *Sartomer*), divalent polyester acrylate oligomers (for example Genomer 3135, Genomer 3143 *Rahn*) or polyether acrylate oligomers (for example Genomer 3414, Genomer 3430 *Rahn*).

In a preferred embodiment, the optically clear adhesive compound comprises a divalent urethane oligomer.

In a preferred embodiment, the optically clear adhesive compound comprises a cohesion-increasing compound selected from the group consisting of a polyester polyurethane acrylate, a polyether polyurethane acrylate, and a polycarbonate polyurethane acrylate.

In a preferred embodiment, the optically clear adhesive compound comprises a cohesion-increasing compound which is an oligomer with a weight-average molecular weight Mw determined by GPC of less than 15.000 g/mol (15 kg/mol).

### Polymer network

According to one embodiment, the optically clear compound is a polymer network.

Polymer networks comprise or consist of polymers, which are crosslinked to form a network. Crosslinking, resulting in the formation of the network, can be based either on chemical and/or physical interactions. Chemical crosslinking involves covalent bonding between polymer chains, often initiated through radical polymerization or by using multifunctional crosslinkers. Physical crosslinking, on the other hand, relies on non-covalent interactions such as hydrogen bonds, ionic interactions, crystallite formation, or phase-separation which can impart desirable properties such as enhanced elasticity and enhanced resilience.

Crosslinking in polymer networks can alter the mechanical properties, thermal stability, and chemical resistance of the resulting material. Crosslinked networks tend to exhibit higher tensile strength and modulus, reduced solubility and swelling in solvents, and improved resistance to thermal degradation and creep. Additionally, the degree and nature of crosslinking can be tailored to achieve specific performance characteristics, making these materials highly versatile for various applications such optically clear adhesive compounds.

In a preferred embodiment, the polymer network is (Meth)acrylic-polymer network, which comprises 50 - 80 % by weight, optionally 60 - 75 % by weight, of (meth)acrylic monomers.

### Blockcopolymers

The block copolymers described in this disclosure are (meth)acrylic block copolymers, preferably comprising at least two A block polymeric units P(A) and at least one B block polymeric unit P(A) (i.e., at least two A block polymeric units are each covalently bonded to at least one B block polymeric unit). Each A block is derived from a first (meth)acrylate monomer and the B block is derived from a second (meth)acrylate monomer. The A block tends to be more rigid than the B block (i.e., the A block has a higher glass transition temperature than the B block). The A block is also referred to herein as a "hard block" and the B block is also referred to herein as a "soft block."

(Meth)acrylic block copolymers are differentiated from other (meth)acrylic copolymers in that they exhibit phase segregation at temperatures lower than the glass transition temperature of the end blocks. This leads to elastomeric properties below that temperature and the ability to compound solvent-free above that temperature. A consequence of this behavior may be superior roll stability and static shear performance of materials compounded with acrylic block copolymers compared to their random acrylic copolymer counterparts.

According to one embodiment, the optically clear adhesive compound comprises 50 - 80 % by weight, optionally 60 - 78 % by weight, or optionally 70 - 75 % by weight, of one or more (meth)acrylic blockcopolymers.

In some preferred embodiments, the acrylic block copolymer comprises 7 - 51 % by weight of a hard block ("A block") and 49 - 93 % by weight of a soft block ("B block") based on the weight of the block copolymer. Higher amounts of the A block tend to increase the stiffness or modulus of the copolymer, which can be used to optimize properties of the composition such as the mechanical strength and modulus. In some preferred embodiments, the hard block comprises polymethyl methacrylate. In some preferred embodiments, the soft block comprises polybutyl acrylate.

In a preferred embodiment the optically clear adhesive compound comprises one or more (meth)acrylic blockcopolymers, wherein the one or more (meth)acrylic blockcopolymers have
i) a molecular weight more than 100.000 g/mol (100 kg/mol); and/or
ii) more than 25 % by weight of hard block, wherein the hard block preferably is polymethyl methacrylate (PMMA).

In a preferred embodiment the optically clear adhesive compound comprises one or more (meth)acrylic blockcopolymers with a molecular weight more than 100.000 g/mol (100 kg/mol).

In another preferred embodiment, the optically clear adhesive compound comprises one or more (meth)acrylic blockcopolymers with more than 25 % by weight of hard block, wherein the hard block preferably is polymethyl methacrylate (PMMA).

Methods of preparing acrylic block copolymers are known to those of skill in the art and are described, for example, in US. Pat. No. 6,806,320 (Everaerts et al.). Acrylic block copolymers useful in embodiments of the present disclosure are also commercially available, for example, from Kuraray Co., Tokyo, Japan under the trade designation "KURARITY."

### Method of producing (Meth)Acrylic-polymer network

According to one embodiment, the optically clear adhesive compound is obtained by
a) phase-separated blockcopolymers, which are combined with one or more plasticizing agents; or
b) polymerization of (meth)acrylic monomers, which comprise bi- or multi-functional crosslinkable (meth)acrylic monomers, in the presence of one or more cohesion-increasing components.

### Phase-separated blockcopolymers and addition of plasticizing agent

In one embodiment the optically clear adhesive compound is obtained by a phase-separated block copolymer to which a plasticizing agent is added. A phase-separated block copolymer is a polymer system, which means it exhibits at least two phases. The skilled person understands this to mean that one phase is rich in one component of the block copolymer, for example, the polymer block P(A), or essentially consists of this component, and the other phase is rich in another component, for example, the polymer block P(B), or essentially consists of this component. The presence of small amounts of one component in the other, which does not prevent the formation of the multiphase structure, is considered negligible. If the inventive block copolymer contains more than two phases, the above applies accordingly to all these phases.

The phase separation is particularly preferably realized in such a way that discrete areas ("domains"), which are rich in polymer block P(A) or polymer block P(B) - i.e., essentially formed from polymer block P(A) or polymer block P(B) - are present in a continuous matrix, which is rich in the respective other polymer block - i.e., essentially formed from the respective other polymer block. An inventive block copolymer is particularly considered to be present in at least two phases if at least one of the following criteria a) - d) is met:
a) Phase boundaries are recognizable in a height profile evaluation or an evaluation of the Young's modulus of an atomic force microscopy (AFM) image of the block copolymer.
b) At least two independent glass transition temperatures are obtained from a Dynamic Differential Calorimetry (DSC) measurement of the block copolymer.
c) At least two tan δ maxima are obtained from a Dynamic Mechanical Analysis (DMA) of the block copolymer.
d) Characteristic peaks in the scattering profile appear from a Small Angle X-Ray Scattering (SAXS) measurement of the block copolymer.

According to the present application a block copolymer BC, which exists in at least two phases, also includes a microphase-separated block copolymer, i.e., a polymer system in which the discontinuous phase is present in a microscopically fine distribution.

### Polymerization in the presence of a cohesion-increasing component

In one embodiment the optically clear adhesive compound is obtained by polymerization of (meth)acrylic monomers, comprising polyfunctional monomers, in the presence of cohesion-increasing components.

The optically clear adhesive compound used may be crosslinked through use of crosslinkable reactive monomers, referred to as polyfunctional monomers. In one such embodiment of the invention, the adhesive compound is crosslinkable via polyfunctional monomers and by means of a photoinitiator, with the adhesive for this purpose including the corresponding polyfunctional monomers as a constituent. The polyfunctional monomers here are preferably selected from the group consisting of difunctional (meth)acrylates, for example 1,10-decanediol di(meth)acrylate, 1,6-hexanediol di(meth)acrylate, 1,4-butanediol di(meth)acrylate, tricyclodecanedimethylol di(meth)acrylate, (poly)ethylene glycol di(meth)acrylate, (poly)propylene glycol di(meth)acrylate, neopentyl glycol di(meth)acrylate and pentaerythritol di(meth)acrylates, and also trifunctional or higher polyfunctional (meth)acrylates as for example pentaerythritol tri(meth)acrylate, dipentaerythritol hexa(meth)acrylate, trimethylolpropane tri(meth)acrylate and tetramethylolmethane tri(meth)acrylate; allyl (meth)acrylates, vinyl (meth)acrylates, divinylbenzene, epoxy acrylates, polyester acrylates, urethane acrylates, and also consisting of the group of the silanes and also further related building blocks. The silanes here may have constructions with differing functionality. The silanes may have only an alkoxy substitution. Alternatively, the silanes may have both an alkyl substitution and an alkoxy substitution on the Si atom. Examples of these silanes are, for instance, vinyltrimethoxysilane, vinyltriethoxysilane, 3-glycidoxypropylmethyldimethoxysilanes, 3-glycidoxypropyltrimethoxysilanes, 3-glycidoxypropylmethyldiethoxysilanes, 3-glycidoxypropyltriethoxysilanes, p-styryltrimethoxysilanes, 3-methacryloxypropylmethyldimethoxysilanes, 3-methacryloxypropyltrimethoxysilanes, 3-methacryloxypropylmethyldiethoxysilanes, 3-methacryloxypropyltriethoxysilanes, 3-acryloxypropyltrimethoxysilanes and further related building blocks. The polyfunctional monomers may be employed individually and in combination of two or more monomers. This leads to advantages for the technical adhesive properties of the adhesive, such as to a greater assembly strength.

In one embodiment, the optically clear adhesive used in the adhesive tape of the invention is obtained with particular preference through the solvent-free polymerization by means of UV syrup technology, as particularly cohesive pressure-sensitive adhesives are obtainable in this way. In this case, a prepolymer (5% to 10% conversion) is produced first from a monomer mixture and a suitable photoinitiator (e.g. Irgacure 651). Next, the final formulation is established, optionally using further monomers and/or further photoinitiators, and is coated between two siliconized PET films. The final curing takes place under UV light, preferably with a radiation dose of up to 10 J/cm². Additional crosslinking may be achieved, moreover, by means of difunctional and polyfunctional acrylates such as, for example, hexanediol diacrylate or polyurethane acrylate-based crosslinkers (e.g. Miramer PU2562NT from Miwon), bearing in mind that there is preferably no free acrylic acid present. Suitable photoinitiators include hydroxycyclohexyl phenyl ketone (Irgacure 184), 2,2-dimethoxy-1,2-diphenylethan-1-one (Irgacure 651), ethyl 2,4,6-trimethylbenzoylphenylphosphinate (TPO-L), 2,4,6-trimethylphenyldiphenylphosphine oxide (TPO) or phenylbis(2,4,6-trimethylbenzoyl)-phosphine oxide (Irgacure 819).

In one embodiment, the optically clear adhesive compound is obtained by syrup polymerization. The term syrup or monomer syrup refers to solutions of polymers or oligomers in monomers (see Benedek, I., & Feldstein, M. M. (Eds.); 2009; Handbook of Pressure-Sensitive Adhesives and Products: Technology of Pressure-Sensitive Adhesives and Products. CRC Press, Taylor & Francis Group; Chapter 5.4.4.2 Monomer Syrups). The monomer mixtures used for polymerization initially have a viscosity that is too low to be easily handled. To increase viscosity, the used monomer mixture is prepolymerized to a syrupy consistency, which can be up to a conversion level of 1 to 20%, preferably 2 to 15%, especially preferably 3 to 10%. This creates a syrup that can be well coated onto a carrier material.

UV light with a wavelength of 280 - 450 nm is preferably used to initiate the prepolymerization.

Furthermore, resins can be optionally mixed with the monomers after or preferably before prepolymerization. Before complete polymerization, additional monomers can be added or mixed into the syrup.

After coating in syrup form, the second stage of the polymerization takes place in an already coated form under an oxygen-free environment until the desired conversion is achieved on the syrup-coated web by further UV light irradiation. The outcome of this second stage polymerization reaction on the web is determined by parameters known to the skilled person such as web speed, number of lamps, UV wavelength, light intensity, and cooling capacity.

The process according to the invention is particularly suitable to produce, for example, adhesive tapes, since the prepolymer can be coated as syrup on a carrier.

In one preferred embodiment, the photopolymerized optically clear adhesive compound is obtained by UV polymerization of a syrup, preferably a (meth)acrylate syrup, in the presence of one or more divalent crosslinkers.

In a preferred embodiment, the formulation of the optically clear adhesive compound comprising the monomer base and cohesion-increasing components has a viscosity of less than or equal to 4000 cps prior to coating and photopolymerization.

### Optically clear adhesive tape

According to another aspect of the invention, the present invention relates to an optical adhesive tape, which comprises at least one layer of optically clear adhesive compound including all embodiments.

For the purposes of this invention, the general term "adhesive tape" comprises all flat structures whose extent in two spatial directions (x-direction and y-direction; length and width) is substantially greater than in the third spatial direction (z-direction; thickness) such as films or film portions, tapes with extended length and limited width, tape portions, die-cuts, labels and the like.

According to one embodiment, the optical adhesive tape is an adhesive transfer tape.

An adhesive transfer tape is, as a skilled person knows, an adhesive tape without a carrier.

In the case of an adhesive transfer tape, the adhesive prior to the application is instead applied between flexible liners, which are provided with a release layer and/or have anti-adhesive properties. For the application, generally a liner is first removed, the adhesive is applied and then the second liner is removed. The adhesive can thus be used directly to join two surfaces.

The adhesive transfer tape according to the invention preferably has a layer thickness, measured in the z-direction, of 10 to 300 µm, preferably 15 to 250 µm, more preferably 25 to 200 µm. Within the described thickness range, a lower thickness can improve the replication process of the holograms, whereas higher thickness can offer improved compensation for any irregularities in the surfaces to be bonded and ensure increased mechanical strength.

According to one embodiment, the optical adhesive tape is a multi-layer tape.

In one embodiment, the multi-layer optical adhesive tape incorporates the inventive optically clear adhesive compound, preferably as one or two layers. This multi-layer configuration can include additional layers such as protective films, barrier coatings, and cushioning layers that enhance the performance of the adhesive tape in various processes.

In one embodiment, the optical adhesive tape is a multi-layer optical adhesive tape, which comprises a backing, wherein the backing material is selected from the group consisting of TAC, PC and PET. Preferably, the backing has optically clear properties and provides mechanically stability in the process of hologram reproduction.

In a preferred embodiment, the optical adhesive tape is a multi-layer optical adhesive tape, which comprises the following layer sequence: OCA - backing - OCA.

### Use of the compound or tape

According to another aspect of the invention, the present invention relates to the use of the optically clear adhesive compound or the optical adhesive tape in a semi-continuous or continuous process.

According to one embodiment, the optically clear adhesive compound is used in a roll-to-roll process.

The roll-to-roll process (or procedure) is a well-known and widely used process in the context of pressure-sensitive adhesives. This method involves the (semi-)continuous processing of flexible materials, such as films or foils, which are unwound from a roll, processed, and then rewound onto another roll. This technique is particularly advantageous for large-scale production due to its efficiency and ability to maintain consistent quality.

In general, the term "semi-continuous" refers to a process that operates in discrete steps or intervals, rather than in a constant flow. This method can involve periodic pauses or stages of production that are repeated in sequence. For the reproduction of a hologram, semi-continuous processes might include periodic alignment checks or adjustments during the replication procedure, ensuring accurate reproduction at each stage before proceeding to the next.

On the other hand, "continuous" processes are characterized by an uninterrupted and steady flow of production, where each step seamlessly transitions into the next without any breaks. In the context of hologram reproduction, a continuous process would involve a smooth and consistent application of the adhesive compound, with ongoing monitoring and adjustments occurring automatically, thereby maintaining a constant rate of replication without pauses.

Both methods have their respective advantages in production, especially in hologram reproduction. Semi-continuous processes allow for careful control and verification at each stage, which can be crucial for precision applications. Continuous processes, meanwhile, offer efficiency and speed, catering to scenarios where large-scale production is required.

The inventive tape can be used for both semi-continuous and continuous processes, including the roll-to-roll process. This offers significant advantages as the tape compensates for surface irregularities, resulting in a lower rate of failures and improved process times.

### Experimental section

### Test methods

All measurements were conducted, unless otherwise indicated, at 23°C and 50% relative air humidity.

### Viscosity

Viscosity of the pressure-sensitive adhesive precursor mixture is measured at 25°C using 20 rpm rotation speed and a cone plate setup, commercially available as CAP2000 from Brookfield. 2 - 5 ml syrup are put on the plate, and hold 10 s. Then the test is started. After 20 s, the viscosity of precursor is stable and can be recorded.

### Thickness

The thickness of a layer of adhesive can be determined by determining the thickness of a section, defined in terms of its length and width, of such an adhesive layer applied to a liner, minus the (known or separately ascertainable) thickness of a section of the same dimensions of the liner used. The thickness of the adhesive layer can be ascertained with accuracies of less than 1 µm deviation using commercially available thickness gauges (sensor test devices). If thickness fluctuations are detected, the mean value of measurements at not less than three representative locations is reported, thus in particular not measured at pinches, folds, specks and the like.

### Tensile strength by means of tensile tester, Zwick

Strips of width 15 mm having a length of around 150 mm are cut out of the sample under investigation (adhesive tape, i.e. carrier provided with adhesive preferably on both sides, or plain carrier only) in longitudinal direction by means of a strip cutter or razor blade knife. The sample, preconditioned under the test conditions for 24 h, is clamped perpendicularly into the middle of the clamping jaws with a clamped length of 50 mm and stretched at a speed of 150 mm/min until it tears. The tear is supposed to occur in about the middle of the strip. If the tear is close to the jaws (closer than 1 cm), the value should be rejected and a further strip should be tested instead. 5 measurements are conducted per sample variant. The test conditions are 23°C and 50% rel. air humidity. The measurements are made in accordance with EN ISO 527.

### Reporting of results:

F_{break} [MPa] - force at sample tear/break (i.e. tear strength)
EB [%] - elongation at break, i.e. percentage elongation at sample tear/break

### Rheology

### Dynamic Mechanical Analysis (DMA) to determine storage modulus G', loss modulus G", tan delta and dynamic glass transition temperatur dyn T_{g,dyn}

The storage modulus G' and the loss modulus G" of the pressure-sensitive adhesive are determined by means of a dynamic-mechanical analysis (DMA).

The measurements are made with the shear stress-controlled Anton Paar 702 MultiDrive in an oscillation test under a sinusoidally oscillating shear stress in a plate-plate arrangement - parallel plates system; steel 1.4418.

Preparation of the sample: 2 minutes at 50°C followed by heating or cooling to the measuring temperature.

The storage modulus G' and the loss modulus G" are determined first in a temperature sweep with a frequency of 1 Hz and in a temperature range of -55 to 170 °C with a heating rate of 2.5°C per minute. Second, the determination takes place in a frequency sweep at a temperature of 25°C and in a frequency range of 0.001 to max. 100 Hz.

G' and G" are defined as indicated above. Tan delta = G" / G, dynamic T_{g} = temperature for which tan delta is maximum.

The thickness of the measured sample is always between 0.4 and 0.6 mm. The sample diameter is 12 mm in each case.

Shear deformation and axial force "Normal force F N" are adapted to each sample.

### Peel Adhesion

To determine the adhesive strength, glass (X-3D *Schott*) as well as polycarbonate plates (LEXAN9030 colourless 112) are used as a defined adhesion base representing the used polar substrates used for holographic replications. The adhesive sample to be examined, in the form of a 100 µm thick adhesive layer is laminated on a 36 µm etched PET film, is cut to a width of 40 mm and a length of approximately 25 cm, provided with a handling section, and immediately pressed onto the chosen adhesion base. Immediately afterwards, the prepared sample is tested after being rolled by 4kg roller for 5 times. The previously bonded surface element is peeled off at 180° with a speed of 300 mm/min using a tensile testing machine (*Zwick*). The force required for this is measured. The measured value (in cN/cm) is obtained as the average of three individual measurements.

### Glass transition temperature Tg

The glass transition temperature of polymers may be determined by means of dynamic scanning calorimetry (DSC). For this test, about 5 mg of the untreated polymer samples are weighed out into an aluminium crucible (volume 25 µl) and closed with a perforated lid. For the measurement, a DSC 204 F1 from Netzsch is used and is operated under nitrogen for inerting. The sample is first cooled to -150°C, then heated to +150°C at a heating rate of 10 K/min, and cooled again to -150°C. The subsequent second heating curve is run again at 10 K/min, and the change in the heat capacity is recorded. Glass transitions are characterized as steps in the thermogram. The glass transition temperature is determined as follows: a tangent is applied in each case to the baseline of the thermogram before the step. In the region of the step, a line of best fit is placed parallel to the ordinate in such a way that it intersects the two tangents, specifically such as to form two areas of equal content (between each tangent, the line of best fit, and the measurement plot). The point of intersection of the lines of best fit positioned accordingly and the measurement plot gives the glass transition temperature.

### Transmission

The transmission of the adhesive is determined using a bubble-free adhesive layer, unless otherwise specified with a thickness of 100 µm, according to ASTM D1003 - 13 (Procedure A (BYK Gardner Haze Gard Plus), standard illuminant D65). The transmission of the adhesive is determined via the VIS spectrum, i.e. the wavelength range of the measured spectrum comprises all wavelengths between 800 nm and 400 nm at a resolution of 1 nm. An empty channel measurement is performed as a reference over the entire wavelength range. To specify the result, the transmission measurements are averaged in the specified range. A correction of interfacial reflection losses is made. The transmission of other layers is determined analogously and refers to the actual thickness of the layer.

### Haze

For determination of haze, the adhesive is laminated between two glass plates. The haze of the overall construction is determined as described in ASTM D1003-13 using a BYK Gardner Haze Gard Plus. The haze value describes the fraction of transmitted light which is scattered forwards at large angles by the irradiated sample. The haze value therefore quantifies material defects in the surface or the structure that disrupt the clear sight through the sample. The standard requires the measurement of four transmission measurements. For each transition measurement, the light transmittance is calculated. The four transmittances are used to compute the percentage haze value. The haze of other layers is determined analogously and refers to the actual thickness of the layer.

### b-value

The b-value is a measure of discoloration on a yellow-blue colour scale and, together with the L-value (lightness) and the a-value (red-green colour scale), produces an objective determination of the perceived colour. The values referred to as Lab values are determined using the Spectro-Guide Sphere Gloss instrument from BYK Gardner according to ASTM D2244-096 and DIN 6174. To start with, a 3-fold background measurement is carried out on a known reference ground. The adhesive tape is then measured on this reference ground, likewise at three different points. To determine the b-value, the mean value is then formed from the three individual values and the mean value of the reference is subtracted.

### Refractive index

The refractive index is determined using an Abbemat 350 refractometer (Anton Paar). To start with, the sample is measured against air and against water in order to verify the functionality. The adhesive tape or the individual components are then applied to the measuring window and the measurement is started. The measurement is carried out at 20°C.

### Molecular Weight Determination GPC

The weight-average molecular weight Mw was determined by gel permeation chromatography (GPC). The eluent used was THF, measurement took place at 23° C. The precolumn used was PSS-SDV, 5 µ, 103 Å, ID 8.0 mm×50 mm. Separation took place using the columns PSS-SDV, 5 µ, 103 and also 104 and 106 each with ID 8.0 mm×300 mm. The sample concentration was 4 g/l, the flow rate 1.0 ml per minute. Measurement took place against PS standards. (µ=µm; 1 Å=10⁻¹⁰ m).

### Application test

To verify that the OCA material is suited for holographic replications in edge-lit mode, the following setup was used. Firstly, a glass plate was laminated with photopolymer film plus carrier (*Bayfol HX,* Covestro) with the photopolymer facing the glass surface using a hand roller. After that, a 200 µm thick OCA film was laminated on the backing of the photopolymer film. The liner was removed and a surface polished glass cylinder with a maximum shape deviation of 3/50µm (5µm) [according to ISO 10110-5:20216-05], a diameter of 200 mm, a height of 170 mm, and a weight of 11,78 kg, was placed with the curved surface onto the stack. The contact line formed was measured and observed while slowly rolling over the OCA surface. The test is passed when the contact line is more than 2 mm wide, is not interrupted while rolling, the stack does not lift at any of the interfaces and the stack can be disassembled without any residues either on the photopolymer film or on the glass roller and without breaking the OCA.

### Examples

**Table 1 - Commercially available chemicals used**

| Commercially available chemicals used | | | |
|---|---|---|---|
| Acronym | Name | Supplier | CAS No. |
| CN8893NS | Polyurethane acrylate | Sartomer | |
| CN9021 | Polyurethane acrylate | Sartomer | |
| BR-5541M | Polyether polyurethane acrylate | Bomar Chemicals | |
| BR-3747AE | Polyether polyurethane acrylate | Bomar Chemicals | |
| BR-744SD | Polyester polyurethane acrylate | Bomar Chemicals | |
| BR-843S | Polycarbon polyurethane acrylate | Bomar Chemicals | |
| PU2900 | Polyurethane acrylate | Miwon Specialty Chemical Co., Itd | |
| 2-EHA | 2-Ethylhexyl acrylate | LG chem Ltd. | 103-11-7 |
| 4-HBA | 4-Hydroxybutyl acrylate | Osaka organic Chemical Industry LTD. | 2478-10-6 |
| M1086 | 2-Ethylhexyl diglycol acrylate | Miwon Specialty Chemical Co., Itd | 117646-83-0 |
| ISTA | Isooctadecyl acrylate | Osaka organic Chemical Industry LTD. | 93841-48-6 |
| IBOA | Isobonyl acrylate | Sartomer | 5888-33-5 |
| ACMO | Acryloylmorpholine | KJ Chemicals Corporation | 5117-12-4 |
| Irg 184 | Irgacure 184 | IGM Resins | 947-19-3 |
| LA2250 | Blockcopolymer; PMMA content: 30 wt.-%; | | |
| | Mw: 72400 g/mol | | |
| LA2330 | Blockcopolymer; PMMA content: 20 wt.-%; | | |
| | Mw: 135000 g/mol | | |
| LK9243 | Blockcopolymer; PMMA content: 17 wt.-%; | | |
| | Mw: 81600 g/mol | | |
| LA3320 | Blockcopolymer; PMMA content: 16 wt.-%; | | |
| | Mw: 161000 g/mol | | |
| LA2140 | Blockcopolymer; PMMA content: 20 wt.-%; | | |
| | Mw: 86100 g/mol | | |
| Hexamoll DINCH | Bis(7-methyloctyl) cyclohexane-1,2-dicarboxylate | | 166412-78-8 (isomeric mixture) |

### Samples preparation - Examples Ac block copolymers

In a screw-cap glass, the acrylate block copolymer (200 g) is weighed. Subsequently, the plasticizer is added to adjust the solid content ratio given in Table 2a (unless otherwise noted, all percentages and ratios in table 2a are on a weight basis). The solid content of 50% is adjusted with ethyl acetate. The screw-cap glass is then placed on a rolling bench. At room temperature, the acrylate block copolymer dissolves within 24 hours.

The resulting compositions are each coated onto a 50 µm thick siliconized PET liner. Subsequently, drying first takes place for 15 minutes at room temperature, then for 15 minutes at 120°C in a drying oven. The thickness after coating and drying is 100 µm and 200 µm, respectively.

**Table 2a: Formulations of the Optically clear adhesives, wherein for each formulation the type of compound and its content in % by weight is provided, referring to 100 % by weight of the formulation.**

| Formulation | Compound a) | Content a) in wt.-% | Compound b) | Content b) in wt.-% |
|---|---|---|---|---|
| F1-1 | LA2250 | 70 | Hexamoll Dinch | 30 |
| F2-1 | LA2330 | 75 | Hexamoll Dinch | 25 |
| C1-1 | LK9243 | 85 | Hexamoll Dinch | 15 |
| C2-1 | LA3320 | 85 | Hexamoll Dinch | 15 |
| C3-1 | LA2140 | 70 | Hexamoll Dinch | 30 |
| C4-1 | LK9243 | 70 | Hexamoll Dinch | 30 |
| C5-1 | LA2140 | 95 | Hexamoll Dinch | 5 |

**Table 2b: Experimental results of the formulations of Table 2a as optically clear adhesives. The peel adhesion on PC and glass; force at sample tear/break and elongation at break; G* measured at 10 Hz and 25 °C; tan delta in the range of 0,001 - 0,01 Hertz at 25 °C; and Tg,dyn measured at 25 °C are determined as described in the Section Test methods.**

| Formulation | Peel adhesion in cN/cm on | | Tensile strength | | G* in kPa | Tan delta | Tg,dyn in °C |
|---|---|---|---|---|---|---|---|
| | PC | Glass | F_{break} in MPa | EB in % | | | |
| F1-1 | 4 | 8 | 1,23 | 314,8 | 80,5 | 0,056 | -52,8 |
| F2-1 | 49,2 | 28,7 | 1,62 | 414 | 48,5 | 0,043 | -53,4 |
| C1-1 | 57,8 | 50,1 | 0,38 | 201,8 | 80,0 | 0,055 | -47,6 |
| C2-1 | 117 | 85 | 1,33 | 756,8 | 78,0 | 0,095 | -46 |
| C3-1 | 20 | 20 | 0,77 | 328,9 | 76,2 | 0,064 | -52,7 |
| C4-1 | 10 | 10 | 0,11 | 131,6 | 62,6 | 0,062 | -57 |
| C5-1 | 291 | 194 | 2,37 | 527,8 | 279 | 0,102 | -37,3 |

| | | | | | | | |
|---|---|---|---|---|---|---|---|
| The formulations F1-1 and F2-1 have passed the application test and were verified to be suitable OCA material for holographic replications, especially in edge-lit mode. | | | | | | | |

### Samples preparation - PU oligomer UV syrup

Adhesive precursors having the chemical composition as shown in Table 3a (unless otherwise noted, all percentages and ratios in table 3a are on a weight basis) are added into a glass vessel, mixed with 0.2% per weight of Irgacure 184 UV-photoinitiator (BASF) and stirred for 30 minutes, depending on whether the PU oligomer is fully dissolved or not, the mixture is optionally stirred for an additional hour.

Subsequently, a vacuum pump is used to degas the blend under a reduced pressure to remove air bubbles. Then the composition is coated in a thickness of 100 µm and 200 µm, respectively, between two siliconized PET films (one is 75 µm, the other is 100 µm). The reaction is initiated by irradiation with a Heraeus UV LED lamp (wavelength 365nm) with a UV dose of 3000 mJ/cm².

**Table 3a: Formulations of the Optically clear adhesives, wherein for each formulation the monomer base in % by weight, the type of compound b) and its content in % by weight is provided, referring to 100 % by weight of the formulation.**

| Formulation of OCA | Monomer base of Compound a) in wt.-% | | | | | | Compound b) | Content of b) in wt.-% |
|---|---|---|---|---|---|---|---|---|
| Monomers | 4-HBA | 2-EHA | M1086 | ISTA | IBOA | ACMO | | |
| F1-2 | 0 | 10 | 20 | 14 | 16,8 | 0 | CN8893NS | 39,2 |
| F2-2 | 0 | 0 | 9 | 35 | 16,8 | 0 | CN8893NS | 39,2 |
| F3-2 | 0 | 12,4 | 17,6 | 22,7 | 14,19 | 0 | CN8893NS | 33,11 |
| F4-2 | 8,3 | 7,7 | 8,7 | 19,3 | 16,8 | 0 | CN8893NS | 39,2 |
| F5-2 | 4,24 | 0 | 20 | 27,8 | 14,4 | 0 | CN8893NS | 33,6 |
| F6-2 | 0 | 20 | 0 | 24 | 16,8 | 0 | CN8893NS | 39,2 |
| F7-2 | 0 | 19,9 | 1,2 | 28,7 | 15,06 | 0 | BR3747AE | 50,2 |
| C1-2 | 15,9 | 17,3 | 0 | 2,7 | 0 | 16 | BR3747AE | 48,1 |
| C2-2 | 24 | 46 | 0 | 0 | 9 | 0 | CN8893NS | 21 |
| C3-2 | 4 | 0 | 20 | 0 | 0 | 0 | BR3747AE | 76 |
| C4-2 | 4 | 80 | 0 | 0 | 0 | 0 | PU2900 | 16 |
| C5-2 | 19,7 | 0 | 10,3 | 37,3 | 0 | 2,7 | BR3747AE | 30 |
| C6-2 | 6,2 | 0 | 25,6 | 8,2 | 0 | 30 | BR3747AE | 30 |

| | | | | | | | | |
|---|---|---|---|---|---|---|---|---|
| wherein for each polymer formulation 0.2 wt.-% of the photoinitiator Igr 184 was added to 100 wt-% of polymer formulation before photopolymerisation. | | | | | | | | |

**Table 3b: Experimental results Experimental results of the formulations of Table 3a as optically clear adhesives. The peel adhesion on PC and glass; force at sample tear/break and elongation at break; viscosity of the formulation; G* measured at 10 Hz and 25 °C; tan delta in the range of 0,001 - 0,01 Hertz at 25 °C; and Tg,dyn measured at 25 °C are determined as described in the Section Test methods.**

| Formulation of OCA | Peel adhesion in cN/cm on | | Tensile strength | | Viscosity in cps | G* in kPa | Tan delta | Tg,dyn in °C |
|---|---|---|---|---|---|---|---|---|
| | PC | Glass | F_{break} in MPa | Elongation in % | | | | |
| F1-2 | 11,05 | 0,95 | 1,69 | 216 | 2119 | 504 | 0,017 | -17,6 |
| F2-2 | 19,88 | 2,17 | 6,43 | 409 | 3413 | 949 | 0,103 | 15 |
| F3-2 | 23,04 | 1,37 | 1,81 | 208 | 1106 | 207 | 0,025 | -16,1 |
| F4-2 | 24,16 | 9,93 | 2,19 | 257,1 | 2418,7 | 404 | 0,019 | -10,8 |
| F5-2 | 27,39 | 3,28 | 1,91 | 253,9 | 1518,5 | 406 | 0,021 | -9,7 |
| F6-2 | 35,5 | 3,9 | 2,89 | 270,2 | 2100 | 330 | 0,046 | -0,5 |
| F7-2 | 18,95 | 2,97 | 1,53 | 184,3 | 1430 | 184 | 0,01 | -20,9 |
| C1-2 | 47,28 | 20,22 | 4,76 | 275 | 1170 | 1042 | 0,227 | 60,7 |
| C2-2 | 84,8 | 69,8 | 0,90 | 323 | 791 | 264 | 0,011 | -31,5 |
| C3-2 | 6,67 | 0,5 | 0,43 | 156,2 | 15800 | 481 | 0,006 | -48,8 |
| C4-2 | 2,5 | 0,3 | 0,12 | 18,47 | 105,7 | 367 | 0,02 | -16,2 |
| C5-2 | 127,1 | 82,7 | 1,00 | 239,7 | 330,8 | 270 | 0,015 | -11,5 |
| C6-2 | 176,8 | 81 | 5,43 | 413,5 | 322,5 | 7078 | 0,398 | 41,6 |

| | | | | | | | | |
|---|---|---|---|---|---|---|---|---|
| The formulations F1-2 to F7-2 have passed the application test and were verified to be suitable OCA material for holographic replications, especially in edge-lit mode. | | | | | | | | |

## Claims

1. Optically clear adhesive compound, for use as optical adhesive tape in the replication process of holograms, wherein the optically clear adhesive compound has a G* (10 Hz, 25 °C) ≤ 5 MPa, preferably a G* (10 Hz, 25 °C) ≤ 2 MPa, more preferably a G* (10 Hz, 25 °C) ≤ 1 MPa, wherein G* is calculated by the formula: G* = (G'² + G"²)^{0.5}, wherein G' and G" are determined by dynamic-mechanical analysis.

2. Optically clear adhesive compound according to claim 1, wherein the optically clear compound has
- a tan delta (1 Hz) ≤ 0.12, preferably ≤ 0.10, in the frequency range from 10⁻² to 10⁻³ Hertz, determined by dynamic-mechanical analysis; and
- a dynamic glass transition temperature T_{g,dyn} (1 Hz) of ≤ 20°C determined by dynamic-mechanical analysis.

3. The optically clear adhesive compound according to one of the aforementioned claims, wherein the optically clear adhesive compound fulfills the following criteria:
- a peel adhesion on polycarbonate of ≤ 50 cN/cm;
- a peel adhesion on glass of ≤ 20 cN/cm;
- a tensile strength of ≥ 1.2 MPa measured.

4. The optically clear adhesive compound according to one of the aforementioned claims, wherein the optically clear adhesive compound is based on a material selected from Polyurethan (PU), silicone (Si), polyvinyl chloride (PVC), styrene-ethylene-butylene-styrene (SEBS), (meth)acrylates, or mixtures thereof.

5. The optically clear adhesive compound according to one of the aforementioned claims, wherein the compound comprises
a) 35 - 80 % by weight, optionally 50 - 75 % by weight, or optionally 60 - 70 % by weight, of one or more poly(meth)acrylates P; and
b) 20 - 65 % by weight, optionally 25 - 50 % by weight, or optionally 30 - 40 % by weight, selected from the group of
b1) one or more plasticizing agents; and
b2) one or more cohesion-increasing components.

6. The optically clear adhesive compound according to claim 5, wherein the monomer base of the one or more poly(meth)acrylates P comprises
I. 60 - 92 % by weight, optionally 70 - 90 % by weight, optionally 75 - 80 % by weight, of (meth)acrylic esters having a homopolymer glass transition temperature Tg determined by dynamic scanning calorimetry, which is lower or equal than 0 °C, optionally lower or equal than -10 °C, or optionally lower or equal than -20 °C;
II. 8 - 40 % by weight, optionally 10 - 30 % by weight, optionally 20 - 25 % by weight, of monomers selected from the group consisting of
a. (meth)acrylic esters;
b. (meth)acrylic amides;
c. monomers comprising at least one polymerizable vinyl group;
having a homopolymer glass transition temperature Tg determined by dynamic scanning calorimetry, which is higher than 0 °C, optionally higher or equal than 10 °C, or optionally higher or equal than 20 °C.

7. The optically clear adhesive compound according to one of the aforementioned claims comprising one or more plasticizing agents, wherein the one or more plasticizing agent are an aliphatic ester, preferably a 1,2-cyclohexane dicarboxylic acid diisononyl ester.

8. The optically clear adhesive compound according to one of the aforementioned claims comprising one or more cohesion-increasing components, wherein the one or more cohesion-increasing components are a difunctional oligomer, preferably selected from the group of a divalent urethane oligomer and a divalent polyester oligomer.

9. The optically clear adhesive compound according to one of the aforementioned claims, wherein the optically clear compound is a polymer network.

10. The optically clear adhesive compound according to one of the aforementioned claims, wherein the optically clear adhesive compound comprises 50 - 80 % by weight, optionally 60 - 78 % by weight, or optionally 70 - 75 % by weight, of one or more (meth)acrylic blockcopolymers.

11. The optically clear adhesive compound according to one of the aforementioned claims, wherein the optically clear adhesive compound is obtained by
a) phase-separated blockcopolymers, which are combined with one or more plasticizing agents; or
b) polymerization of (meth)acrylic monomers, which comprise polyfunctional monomers, in the presence of one or more cohesion-increasing components.

12. Optical adhesive tape comprising at least one layer of optically clear adhesive compound according to any one of the aforementioned claims.

13. Optical adhesive tape according to claim 12, wherein the optical adhesive tape is an adhesive transfer tape.

14. Optical adhesive tape according to claim 12, wherein the optical adhesive tape is a multi-layer tape.

15. Use of the optically clear adhesive compound according to one of the claims 1 to 11, or the optical adhesive tape according to one of the claims 12 - 14 in a semi-continuous or continuous process.

16. Use of the optically clear adhesive compound according to claim 15, wherein the semi-continuous or continuous process is a roll-to-roll process.
